# FASCICULE DE BREVET EUROPEEN

(11) **EP 1 059 040 B1**
(45) Date de publication et mention de la délivrance du brevet: **27.09.2006**
(21) Numéro de dépôt: 00401649.9
(22) Date de dépôt: 09.06.2000
(51) Int. Cl.: A23J 3/08, A23J 3/22, A23J 3/26, A23P 1/12

(54) **Produit alimentaire à texture fibreuse obtenue à partir de protéines de lactosérum**
Nahrungsmittel mit faseriger Textur, das aus Molkeproteinen erzeugt wurde
Foodstuff with fibrous texture obtained from whey proteins

(30) Priorité: 11.06.1999 FR 9907433
(43) Date de publication de la demande: 13.12.2000
(73) Titulaire: BONGRAIN S.A., 78220 Viroflay (FR)
(72) Inventeur: Roussel, Laurence, 78730 Saint-Arnoult-en-Yvelines (FR); Buret, Florence, 75015 Paris (FR); Lechat, Yves, 78730 Saint-Arnoult-en-Yvelines (FR)
(74) Mandataire: Derambure, Christian

(56) Documents cités:
- EP-A- 0 225 770
- EP-A- 0 727 138
- WO-A-96/34539
- GB-A- 1 471 398
- GB-A- 2 066 644
- US-A- 4 156 028
- US-A- 4 315 954

## Description

La présente invention concerne des produits alimentaires présentant une texture fibreuse, obtenus principalement à partir de protéines de lactosérum, un procédé de fabrication par cuisson extrusion de ces produits, une installation de fabrication pour la mise en oeuvre du procédé.

On connaît déjà des procédés de fabrication de produits laitiers en continu par extrusion.

Le document EP-A-727 138 décrit un tel procédé d'extrusion qui permet d'obtenir un fromage ou une spécialité fromagère à partir d'un caillé ou d'un rétentat issu de l'ultra filtration de lait.

Le procédé comprend les étapes suivantes : introduction des matières premières, transfert dans un fourreau comprenant au moins une section dans laquelle la température est comprise entre 60° et 120°C, faisant intervenir un malaxage, une texturation et une cuisson. Ce procédé permet d'obtenir des produits à structure étirée, présentant des fibres d'un diamètre généralement supérieures à 0.1 mm et de l'ordre du mm.

Le document WO-96/34 539 décrit un procédé d'obtention d'une matrice de protéines texturées contenant une dispersion de corps d'inclusion.

Ces produits sont obtenus par un procédé d'extrusion à haute température, notamment 125 à 160°C. Ces hautes températures permettent la destruction du mélange initial de protéines. Les produits obtenus comprennent un ensemble de fibres protéiques stabilisées après refroidissement.

Ce document décrit essentiellement l'utilisation de protéines végétales telles que du soja.

Le document WO-96/25051 décrit un procédé de fabrication d'un fromage fibreux à pâte molle ou semi-molle. Cette masse fibreuse est obtenue après l'extrusion de caillebotte.

Ces procédés ne permettent pas d'obtenir à partir d'une préparation fromagère ou laitière un produit présentant une structure au caractère fibré extrêmement fin, comprenant des fibres de dimensions comprises entre le µm et 0.1 mm perçues lors de la mastication du produit et lui conférant des propriétés organoleptiques originales.

Par ailleurs le document US 4 156 028 décrit un procédé de fabrication de produits fibrés présentant des fibres de l'ordre par exemple de 100 µm de diamètre. Toutefois ces produits sont obtenus par une technique de dissolution puis envoi dans un bain de coagulation dont le principe et le matériel sont très différents d'une cuisson extrusion combinant des caractéristiques spécifiques de pression et de température. Les produits obtenus ne présentent pas une structure en réseau ramifié telle que décrite plus loin.

A cet effet, l'invention propose selon un premier aspect un produit susceptible d'être obtenu par cuisson extrusion d'un mélange d'origine laitière ou fromagère qui comprend des protéines de lactosérum, le produit ayant une structure fibreuse présentant un réseau de fibres macroscopiques, d'un diamètre de l'ordre de 0.1 mm à 1 mm, ramifiées en fibres microscopiques d'un diamètre de l'ordre de 1 µm à 0.1 mm.

La matière sèche du produit comprend typiquement de 30% à 100% de matière sèche issue de lactosérum.

Le produit comprend 15 à 50% de matière sèche et typiquement 25 à 40%. La matière sèche du produit comprend au moins 35% de protéines totales.

La matière sèche issue de lactosérum comprend des protéines isolées et/ou concentrées, et/ou du lactosérum entier séché, et/ou des fractions de lactosérum séchées comme du lactose, des matières grasses de lait, de la lactoferrine, du calcium ou autres minéraux ou fractions du lait.

Selon une réalisation, le produit comprend, en plus des protéines de lactosérum, d'autres fractions protéiques du lait de type caséines ou caséinates, du fromage, du lait séché ou concentré, la matière sèche du produit comprenant de préférence moins de 10% de caséines.

Selon une autre réalisation, le produit comprend, en plus des protéines de lactosérum, des protéines non laitières, choisies parmi des protéines végétales concentrées ou isolées, notamment de gluten de blé, de soja ou de pois, du blanc d'oeuf liquide ou sec, les protéines non laitières représentant 0 à 70% de la matière sèche du mélange, de préférence 20 à 50%.

Selon un deuxième aspect, l'invention concerne une préparation alimentaire incorporant un produit tel que décrit ci-dessus ajouté à des ingrédients divers choisis parmi notamment des fromages, du lait et produits dérivés (du yaourt, crème de lait, poudre de lait, fromage blanc, beurre), des céréales, des amidons, farines, semoules, des fruits et fruits secs, des épices, des aromates, des matières grasses, des arômes, des ingrédients sucrés (sucre, miel...), des morceaux de viande ou de poisson, des légumes, de manière à former des plats cuisinés, des en-cas, sandwichs, goûters, préparations pour petit déjeuner, des snacks ou saucisses de fromage, des produits végétariens, des pâtes à tartiner, des pâtés, des ingrédients culinaires,...

La préparation alimentaire présente selon une réalisation une matrice comprenant des fibres ou des faisceaux de fibres de dimensions de l'ordre du mm ou du cm, la préparation ayant des dimensions de l'ordre de quelques centimètres.

Elle est mise en forme par formage mécanique, dosage, moulage ou mise en boyau puis pasteurisée et tranchée, les préparations obtenues pouvant être décorées, marquées, cuites ou pré-cuites, pasteurisées, stérilisées, conditionnées.

Selon une réalisation, la préparation comprend un produit tel que décrit précédemment entourant un produit de fourrage laitier ou non laitier.

Selon une autre réalisation, la préparation comprend un produit tel que décrit précédemment entouré d'un produit d'enrobage laitier ou non laitier.

La préparation peut aussi comprendre des sels, épices, aromates et arômes, de l'huile ou autre matière grasse, un correcteur d'acidité tel que de l'acide lactique.
Selon un troisième aspect, l'invention concerne un procédé de fabrication de produits présentant une structure fibreuse qui comprend les étapes suivantes :
a) introduction des matières premières contenant des protéines de lactosérum, dans un extrudeur à au moins une vis ;
b) transfert des matières premières de l'amont vers l'aval du fourreau de l'extrudeur, la configuration de la ou des vis et la température à l'intérieur du fourreau, de l'amont vers l'aval étant adaptés pour faire subir aux matières premières successivement une étape de malaxage et de chauffage de la matière jusqu'à une température de 130°C environ, puis une étape de fusion et de montée en température et en pression de la matière au-delà de 130°C, généralement entre 140°C et 200°C, et entre 0 et 50 bars, de manière à obtenir la plastification de la matière transférée, notamment des protéines de lactosérum ;
c) extrusion, à l'extrémité aval du fourreau, de la matière obtenue après plastification, à travers une filière adaptée à texturer, à mettre en forme et à refroidir la matière, de manière à obtenir un produit présentant une structure fibreuse.

Le refroidissement de la matière se fait dans la filière jusqu'à une température de 100°C, voire moins entre 80°C et 10°C, et comprend un premier refroidissement dans une zone non refroidie de la filière en sortie du fourreau, puis un second refroidissement dans une zone refroidie de la filière, le premier refroidissement correspondant à une zone d'alignement du mélange fondu qui est dans un état visqueux selon une viscosité comprise entre 1.000 et 500.000 centipoises, le second refroidissement correspondant à une zone de changement de phase de l'état visqueux à l'état solide, la vitesse linéaire de passage du produit en sortie de filière étant de l'ordre de 2 à 10 m/min.

Le chauffage de l'étape b) jusqu'à 130°C est progressif ou par paliers.

La température peut être régulée pour modifier la texture des produits en cours de procédé.

Le mélange introduit dans l'extrudeur est sous forme de poudre, toute l'eau nécessaire étant introduite avant l'étape de fusion, ou sous forme liquide ou pâteuse.

Selon une réalisation, les protéines de lactosérum sont issues de concentrats ou isolats de protéines de lactosérum de 50 à 90 % de pureté, de préférence de 70 à 80 %, comprenant en outre du lactose, des matières grasses, des minéraux, des protéines secondaires du type caséine macropeptide.

Le procédé comprend en outre une étape de découpe en sortie de filière de type hachage, coupe, écrasement, dilacération, déchiquetage ou analogue, de manière à obtenir des fibres hachées formant des miettes ou des faisceaux.

Selon une réalisation, il comprend une étape de séchage du produit en sortie de filière après découpe pour obtenir des fibres le cas échéant réhydratables pour des préparations alimentaires

II peut comprendre en outre une étape de reprise culinaire utilisant les fibres hachées mélangées à des ingrédients divers tels que du fromage, du lait et produits dérivés, des céréales, des amidons, farines ou semoules, des matières grasses, des épices, des aromates, des arômes.

Il peut aussi comprendre une étape de mise en forme comprenant des opérations de formage mécanique dans une formeuse ou dans des moules, ou une étape de mise en boyau suivie de pasteurisation et de tranchage, les produits obtenus subissant le cas échéant au moins une des étapes suivantes : décoration, enrobage, marquage, fourrage, fritage, cuisson, pasteurisation, stérilisation, conditionnement.

Selon une réalisation, à l'étape d'extrusion, on fourre la matière transférée dans la filière d'un produit de fourrage introduit par une tête de coextrusion débouchant dans la filière.

On peut obtenir le produit de fourrage par un procédé d'extrusion.
Selon un quatrième aspect, l'invention concerne une installation de fabrication pour la mise en oeuvre du procédé présenté ci-dessus, comprenant un extrudeur à vis comportant deux vis sensiblement identiques s'engrenant l'une dans l'autre et entraînées en rotation dans un même sens de rotation ou en sens contraire à l'intérieur d'un fourreau allongé, des moyens d'alimentation disposés à une partie extrême amont du fourreau équipés d'un ou plusieurs dispositifs de dosage adaptés à fournir le mélange à un débit prédéterminé, une filière d'extrusion située à l'extrémité aval dudit fourreau, des moyens de traitement thermique adaptés à réguler finement la température à l'intérieur du fourreau et de la filière d'extrusion, ledit fourreau comprenant :
- une première zone d'alimentation de la formulation du produit ;
- une deuxième zone de malaxage, le cas échéant d'hydratation, et de chauffage de la matière jusqu'à au moins 130°C à coeur ;
- au moins une troisième zone de fusion, de montée en température et en pression de la matière au-delà de 130°C, généralement entre 140 et 200°C, et entre 0 et 50 bars, selon la composition de la formule, dans laquelle se fait la plastification des protéines notamment des protéines de lactosérum.

La deuxième zone de malaxage et chauffage comprend entre 2 et 5 modules, la troisième zone de fusion comprend 1 à 3 modules, le rapport entre la longueur des vis et le diamètre des vis étant compris entre environ 10 et 33, et typiquement entre 25 et 33.

La filière d'extrusion comprend une première portion non refroidie adjacente à l'extrémité aval de l'extrudeur à vis, suivie d'au moins une portion de refroidissement, correspondant respectivement à une zone d'alignement des fibres à un état visqueux, et à une zone de changement de phase de l'état visqueux à l'état solide.

La fixation de la filière sur le fourreau se fait selon une réalisation par au moins un et typiquement deux adaptateurs, un premier adaptateur constitué d'une ou deux perforations par laquelle est extrudée la matière fondue et plastifiée, et un second adaptateur situé entre le premier adaptateur et la filière d'extrusion, destiné à équilibrer les pressions et le flux de matière.

La filière d'extrusion a une forme intérieure adaptée au produit fini, sa dimension étant paramétrée pour permettre un refroidissement de la matière fondue et plastifiée jusqu'à 100°C, voire moins entre 80 et 10°C, sa surface intérieure étant d'une rugosité contrôlée également pour exercer des forces de cisaillement sur le produit au cours du refroidissement, la combinaison entre le refroidissement et les forces de cisaillement aux parois étant à l'origine de la texturation en continu de la matière refroidie pour former des fibres.

L'installation peut comprendre une pompe d'extrusion située entre la première ou la deuxième interface et la filière, permettant une poussée régulière dans la filière afin de stabiliser l'écoulement des produits. *Il s'agit souvent d'une pompe à engrenages son corps pouvant lui-même être réchauffé par des résistances électriques pour maintenir la masse fondue et plastifiée à la température requise.*

Selon une réalisation, une tête de coextrusion débouche dans la filière d'extrusion.

D'autres objets et avantages de l'invention apparaîtront au cours de la description qui va suivre en référence aux figures dans lesquelles :

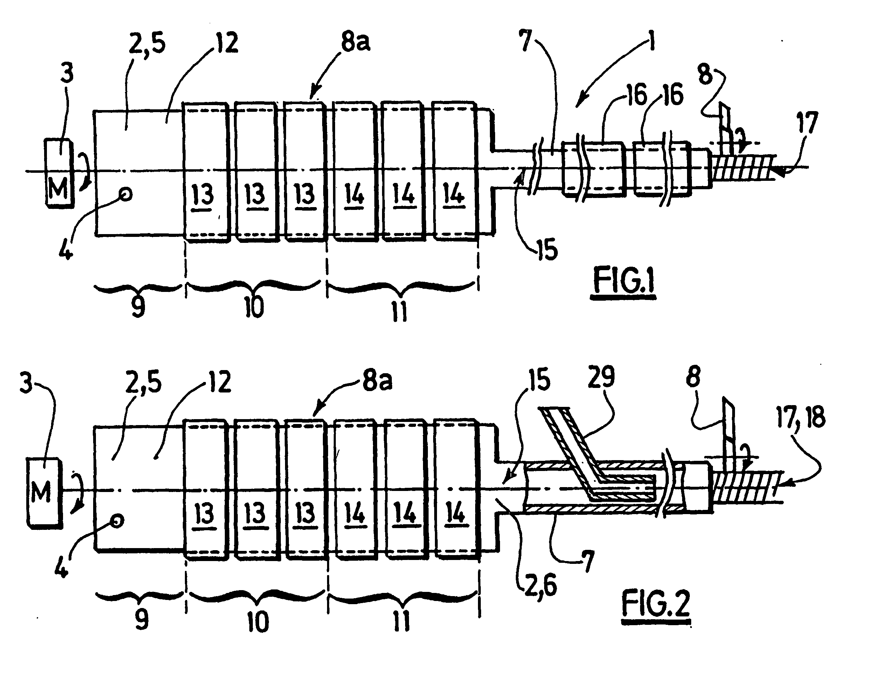

- La figure 1 illustre une installation de fabrication d'ultrafibres selon le procédé d'extrusion à haute température et humidité élevée, selon un mode de réalisation.
- La figure 2 représente une installation de fabrication d'ultrafibres selon le procédé d'extrusion à haute température et humidité élevée, selon un autre mode de réalisation.
- Les figures 3 et 4 représentent des produits extrudés fibrés, après hachage en sortie de filière d'extrusion.
- La figure 5 représente une vue en coupe d'un agrandissement d'un faisceau de fibres tel que dans la figure 3 ou 4 et isolé.
- La figure 6 représente en agrandissement un fragment de produit sorti de filière d'extrusion, des fibres étant mises en évidence par un étirement manuel (grossissement x10).
- Les figures 7 et 8 représentent des préparations alimentaires élaborées à partir de produits extrudés fibrés incorporés dans un mélange comprenant d'autres constituants, notamment des céréales ; la figure 8 est un agrandissement de la figure au niveau d'un faisceau de fibres au centre ;
- La figure 9 représente une vue agrandie de la figure 8 au niveau d'une zone révélant des fibres isolées. Sur la figure 7, chaque graduation de la réglette représente un mm.

On va tout d'abord décrire une installation de fabrication pour la mise en oeuvre du procédé permettant d'obtenir les produits laitiers fibrés.

Cette installation comprend un extrudeur à vis 1 comportant deux vis sensiblement identiques s'engrenant l'une dans l'autre et entraînées en rotation dans un même sens de rotation ou en sens contraire à l'intérieur d'un fourreau 2 allongé. On peut aussi envisager un extrudeur comprenant une vis.

Un tel extrudeur comprend un moteur 3 destiné à entraîner en rotation les deux vis, imbriquées l'une dans l'autre, par l'intermédiaire éventuellement d'un réducteur à engrenages. La puissance d'entraînement peut être de 25 à 100 kW par exemple. De préférence, ces vis sont auto-nettoyantes et le fourreau 2 peut être déplacé manuellement ou hydrauliquement dans sa direction longitudinale pour faciliter l'accès aux vis.
Bien entendu, les matériaux utilisés pour la fabrication du fourreau 2 et des vis sont compatibles avec les aliments.

Un orifice d'alimentation 4 est disposé vers une partie extrême amont 5 du fourreau. Cet orifice d'alimentation 4 permet d'introduire des matières premières à traiter dans l'extrudeur à vis 1.

Le fourreau peut également comporter des ouvertures pour une alimentation secondaire le long du trajet des vis, par exemple une alimentation en eau.

Une filière d'extrusion 7 est située à l'extrémité aval 6 du fourreau 2. Un dispositif de découpe 8, et le cas échéant de récupération, est placé à la sortie de la filière d'extrusion.

De manière connue, cette filière d'extrusion 7 a un diamètre réduit par rapport au diamètre de l'alésage du fourreau, de manière à comprimer les matières transférées.

Pour une fabrication en continu, l'installation comprend un dispositif de dosage adapté à fournir dans l'orifice d'alimentation 4 les matières premières à un débit prédéterminé.

Des moyens de chauffage 8a et de refroidissement sont adaptés à régler la température à l'intérieur du fourreau 2 et de la filière d'extrusion 7.

On décrit maintenant plus précisément la structure du fourreau 2 et le procédé d'extrusion.

On désignera par le terme « mélange » les matières premières soumises aux étapes du procédé ultérieures à l'introduction, c'est à dire l'étape de chauffage malaxage puis l'étape de fusion.

Le fourreau 2 comporte trois zones 9, 10, 11 adjacentes.

La première zone 9 est une zone d'alimentation, dans laquelle sont introduites les matières premières à extruder. C'est à ce niveau que débouche l'orifice d'alimentation 4 du mélange.

Selon une réalisation, ces matières premières sont sous forme d'une poudre solide introduite par l'orifice d'alimentation, additionnée d'eau. L'eau du mélange est ajoutée dans la zone d'alimentation en totalité ou en partie également dans la deuxième zone 10.

Selon une autre réalisation, ces matières premières sont sous forme liquide introduites par l'orifice d'alimentation 4, dans le cas par exemple d'une préparation laitière liquide.

Selon une autre réalisation, ces matières premières sont sous forme d'une pâte dans le cas d'une préparation fromagère telle que du caillé broyé, introduit par l'orifice d'alimentation, de l'eau étant le cas échéant additionnée dans la zone d'alimentation et/ou dans la deuxième zone 10.

Toute l'eau du mélange est ajoutée avant l'étape de fusion.

La composition du mélange est détaillée par la suite.

La deuxième zone 10 est une zone de malaxage, le cas échéant d'hydratation, et de chauffage du mélange jusqu'à au moins 130°C à coeur. Le mélange est transféré de l'amont vers l'aval du fourreau 2, en étant soumis à des contraintes de compression et de cisaillement, tout en étant chauffé comme cela sera décrit par la suite.

La troisième zone 11 est une zone de fusion, de montée en température et en pression de la matière au-delà de 130°C, généralement entre 140°C et 200°C, et entre 0 et 50 bars, selon la composition de la formule, notamment son humidité. La troisième zone 11 fournit un traitement thermo-mécanique suffisant pour faire fondre une majorité des composants alimentaires dans cette zone, et notamment les protéines de lactosérum, qui subissent une étape de plastification. Cette étape de plastification et les conséquences sur le produit final obtenu seront détaillées par la suite.

On va décrire maintenant plus précisément un mode de réalisation du fourreau 2 comportant les première 9, deuxième 10 et troisième 11 zones. Les zones comprennent au moins un module de 200 ou 250 mm.

Chaque module de fourreau est à une température déterminée préréglée. Selon les températures définies, le chauffage est plus ou moins continu et progressif. Les températures de chaque module peuvent être régulées en cours de procédé selon les matières premières introduites et les produits souhaités en fin de filière.

La première zone 9 comprend un module 12 dans lequel la température est égale à la température spontanée du mélange entrant dans l'extrudeur.

Selon une première variante, la deuxième zone 10 comprend trois modules 13, la troisième zone 11 comprend trois modules 14.

La température des modules 13 dans la deuxième zone 10 est respectivement 90, 100, 140°C, de l'amont vers l'aval du fourreau 2.

La température des modules 14 dans la troisième zone 11 est respectivement 165, 175, 175°C, de l'amont vers l'aval du fourreau 2.

Selon une deuxième variante, la deuxième zone 10 comprend cinq modules 13 permettant un chauffage progressif en cinq paliers de l'amont vers l'aval du fourreau ; et la troisième zone 11 comprend trois modules 14 comme dans la première variante de réalisation.

Selon une troisième variante de réalisation, la deuxième zone 10 ne comprend que deux modules 13, le chauffage étant ainsi moins progressif que pour les première et deuxième variantes de réalisation ; et la zone de fusion 11 ne comprend qu'un module 14.

Parallèlement à la décomposition du fourreau en modules correspondant chacun à une température donnée, les vis du fourreau se décomposent en plusieurs éléments, chaque élément ayant une structure donnée, de l'amont vers l'aval, la longueur de chaque série d'éléments pouvant coïncider ou non avec la longueur d'un module.

Dans une réalisation, le diamètre D des éléments de vis est de 55,3 mm, la longueur de chaque élément est de 50, 100 ou 200 mm. La longueur totale L des éléments de vis montés sur l'arbre de vis est de 1000 mm, soit un rapport L/D de 18. Il est compris entre 14, dans le cas de quatre modules de fourreau de 200 mm, comme dans la troisième réalisation, et 33 dans le cas de neuf modules de 200 mm, comme dans la deuxième réalisation. Dans le cas de sept modules de 200 mm, il est par exemple de 25.

Selon une réalisation, le fourreau 2 de l'extrudeur 1 est constitué de cinq modules de 200 mm, dont quatre sont chauffés et/ou refroidis pour atteindre une température de consigne régulée finement, notamment par apport successif de chaleur et de frigorie.

Les éléments de vis à simple filet sont désignés par V1F (pas en mm). Les éléments de vis à double filets sont désignés par V2F (pas en mm), les éléments de vis malaxeurs sont désignés par MAL (angle en degrés), les éléments de vis à pas négatif et filet perforé sont désignés par NEG (pas en mm, nombre de perforations par filet x taille en mm).

Dans une réalisation habituelle, le profil de deux vis s'écrit sous la forme suivante :
- zone de 200 mm d'alimentation : 200 mm V2F (50 mm) ;
- zone de 500 mm de malaxage et chauffage : 100 mm V1F (50 mm) + 50 mm MAL (90°) + 150 mm V1F (33 mm) + 50 mm MAL (60°) + 100 mm V1F (25 mm) + 50 mm NEG (-15 mm, 3 x 6 mm) ;
- zone de 300 mm de fusion : 150 mm V1 F (33 mm) + 150 mm V1 F (25 mm).

Ce profil ne constitue qu'un exemple de réalisation de l'invention, de très nombreuses autres combinaisons de profils de vis peuvent être mises en oeuvre avec ces mêmes éléments de vis ou bien avec d'autres éléments de vis de conception proche.

Dans le cas de ce profil, dans la zone de 500 mm de malaxage et de chauffage progressif, la vis présente des éléments de vis malaxeurs, et des éléments de vis V1 F de pas décroissant (50, puis 33, puis 25 mm), permettant d'obtenir une compression progressive des matières traitées.

On décrit maintenant la filière utilisée 7.

La filière 7 est constituée typiquement de plusieurs éléments de filière mis bout à bout et raccordés par des fixations mécaniques adaptées. Sa dimension est paramétrée pour permettre un refroidissement progressif de la matière fondue et plastifiée, jusqu'à 100°C, voire moins par exemple jusqu'à 10°C, et de préférence entre 80 et 30°C.

La surface intérieure de la filière 7 est d'une rugosité contrôlée obtenue par l'usinage de la surface métallique interne de la filière également pour exercer des forces de cisaillement sur le produit au cours du refroidissement. La forme intérieure de la filière est adaptée au produit fini souhaité.

La combinaison du refroidissement et des forces de cisaillement aux parois exercées lors du changement de phase liquide/solide est à l'origine du phénomène de texturation de la matière sous forme de fibres comme décrit plus loin.

Dans certains cas, les forces de cisaillement aux parois et la longueur de la filière peuvent être suffisamment élevées pour permettre l'extrusion du produit sans refroidissement d'appoint à l'extérieur de la filière. Dans la plupart des cas, la filière 7 comprend un système de refroidissement de sa surface externe, par circulation d'eau froide dans une double enveloppe par exemple (eau entre 60°C et 0°C). On peut même envisager de refroidir la filière 7 par une saumure à température négative (-1°C à -20°C).

Cette combinaison de la température de refroidissement de la filière 7 et des forces de cisaillement aux parois internes de la filière 7 dépend étroitement de la forme de la filière, de sa longueur, du matériau de réalisation et de son usinage et évidemment des caractéristiques (température, humidité, ...) et du débit de matière fondue à refroidir.

Selon une première réalisation, la filière est une filière ronde en inox 316 L brut de fraisage de 325 mm² de section de passage permettant de texturer 100 kg/heure de matière sur 8 m de longueur (8 sections de 1 m). Le refroidissement est assuré par une eau glacée à 1°C circulant à 500 litres/heure. L'humidité du mélange extrudé est de l'ordre de 72 %.

Selon une deuxième réalisation, la filière est une filière rectangulaire en inox 316 L brut de fraisage de 1200 mm² de section de passage permettant de texturer 350 kg/heure de matière sur 6 m de longueur (6 sections de 1 m). Le refroidissement est assuré par une eau tiède à 20°C circulant à 1000 litres/heure. L'humidité du mélange extrudé est de l'ordre de 62 %.

La vitesse linéaire de sortie du produit de la filière 7 est de l'ordre de 2 à 10 mètres/minute.

La filière 7 comprend une première portion 15, non refroidie, prolongeant l'extrémité aval de la zone de fusion 11, et au moins une deuxième portion refroidie 16 à l'aide du dispositif ci-dessus. La température du produit en sortie de filière est de 10 à 100°C suivant la rigidité souhaitée.

Dans la première réalisation par exemple, la portion non refroidie 15 a une longueur de 2 mètres.

Selon un mode de réalisation, l'installation comporte entre l'extrémité aval 6 de la zone de fusion 11, et la filière d'extrusion 7, un premier adaptateur.

Ce premier adaptateur consiste généralement en une (ou deux) perforation(s) par laquelle est extrudée la matière fondue et plastifiée. S'il y a deux perforations, celles-ci convergent en une seule sortie. Si la filière d'extrusion est de petit diamètre, les perforations sont généralement coniques. Le premier adaptateur comporte souvent deux perforations latérales dans lesquelles viennent se fixer une sonde de mesure de la température de fusion Tf et une sonde de mesure de la pression P. La sortie du premier adaptateur peut être ronde, ovale, carrée, rectangulaire ou de la forme intérieure exacte de la filière d'extrusion (celle-ci pouvant être de forme ludique...).

Selon une réalisation, l'extrudeur comprend, outre le premier adaptateur, un second adaptateur entre le premier adaptateur et la filière d'extrusion.

Ce second adaptateur peut être de forme intérieure variée selon la forme intérieure du premier adaptateur et celle de la filière d'extrusion. Il peut comporter une plaque de diffusion constituée de plusieurs dizaines de perforations de petites tailles permettant de diviser le flux de matière fondue et plastifiée.

Généralement, on s'arrange pour que la surface totale des perforations de la plaque de diffusion constitue une restriction de l'ordre de 10 à 50 % par rapport à la section de passage dans la filière d'extrusion.

Selon une réalisation une pompe d'extrusion est insérée entre le deuxième adaptateur et la filière, destinée à réaliser une poussée régulière dans la filière pour une meilleure stabilisation de l'écoulement.

De plus, plusieurs filières de refroidissement peuvent être disposées parallèlement en sortie du fourreau à vis.

On décrit maintenant l'impact du traitement thermo-mécanique dans l'extrudeur sur les produits obtenus en sortie de filière.

Grâce aux températures élevées utilisées dans la zone de fusion, les composants thermo-coagulables du mélange subissent une plastification. On entend par protéines thermo-coagulables des protéines telles que les protéines de lactosérum, le blanc d'oeuf, des globulines, des protéines musculaires de poisson ou de viande, par opposition à des protéines de type non thermo-coagulables telles que des caséines ou le collagène. Ces protéines thermo-coagulables ont la propriété de gélifier ou coaguler vers 50-90°C, et d'être ainsi sous forme de coagulum ou gel solide à 100°C.

L'état de plastification est atteint à des températures de l'ordre de 130 à 200°C, généralement autour de 145-170°C, ceci pour des humidités en cours d'extrusion de l'ordre de 50 à 80 %, généralement entre 60 et 75 %, et des taux de matière grasse sur matière sèche en cours d'extrusion de l'ordre de 0 à 40%, généralement entre 2 et 20 %.

Les forces de cisaillement entraînent a priori un réchauffement par friction. La pression dans l'extrudeur n'influencerait pas les interactions moléculaires, notamment entre protéines, mais permettrait d'atteindre des températures élevées de 130-200°C sans ébullition ou formation de vapeur.

De façon surprenante, le passage par cet état de plastification des protéines thermo-coagulables, notamment des protéines de lactosérum, confère au mélange transféré dans le fourreau une viscosité originale, vraisemblablement assez fluide, viscosité entre 1000 et 500 000 centipoises, propre à lui donner une texture spécifique lors du refroidissement dans la filière.

On suppose que la consistance du mélange passe successivement d'un état solide en début de zone 10, à un état liquide dans la zone de fusion 11 (viscosité de 1000 à 100 000 centipoises), à un état visqueux (viscosité de 100 000 à 500 000 centipoises) dans la zone non refroidie 15 de la filière 7, zone non refroidie dans laquelle se ferait l'alignement progressif du mélange en filets de fluide, puis enfin, à un état solide dans la zone refroidie 16 de la filière, zone refroidie dans laquelle des fibres orientées à l'état solide se forment.

Lors de la plastification, les protéines, notamment de lactosérum, ont leur structure modifiée, une nouvelle structure se constituant sous l'action conjuguée du refroidissement et des forces de cisaillement dans la filière.

Les constituants du mélange, notamment les protéines de lactosérum se réarrangent sous forme d'une structure macroscopique et microscopique orientée, constituée de couches superposées, de fibres alignées ou enchevêtrées, avec des ramifications multiples, voire fibres organisées en chevrons. Les fibres sont désignées indifféremment ultrafibres ou fibres en réseau ramifiées dans le texte.

On va maintenant décrire les produits obtenus 17 par le procédé décrit précédemment.

En sortie de filière 7, le produit obtenu 17 avant un éventuel traitement ultérieur, par exemple de découpe ou dilacération, se présente sous la forme d'un boudin 18, par exemple cylindrique et de diamètre voisin du diamètre de la filière dans le cas d'une filière de section circulaire, produit en continu pour un procédé en continu.

Ce boudin 18 comprend un ensemble de fibres qui peuvent être séparées, par exemple manuellement, par paquet de fibres, voire individualisées en ultrafibres.

Les fibres ont typiquement un diamètre fonction des matières premières utilisées et des conditions opératoires au sein du fourreau et de la filière de l'extrudeur.

Avant traitement de type hachage, la longueur des fibres peut être élevée, de l'ordre de plusieurs centimètres, par exemple 4 ou 5 centimètres.

L'observation à fort grossissement par exemple 50 fois du produit 17 révèle que cette structure fibrée du produit visible à l'échelle macroscopique se retrouve à l'échelle microscopique. Cette structure s'apparente à une structure de type fractale, auto-reproduite, c'est à dire que les ramifications des fibres semblent non finies à l'image d'un réseau hydrographique. Les ramifications s'étendent vers l'infiniment petit : la même structure ramifiée est aperçue à chaque niveau de grossissement. Cette structure extrêmement finement fibrée s'apparente également à celle des muscles striés squelettiques de mammifères, constituée en cascade de filaments, microfilaments et fibrilles. On qualifie ces fibres d' "ultrafibres" du fait de leur caractère extrêmement fin.

Les amas de fibres les plus gros ont couramment des dimensions au moins de 5 à 20 cm de long et un diamètre de 0.5 à 2 mm, voire de l'ordre du cm pour des filières de 20 à 30 mm de diamètre.

Les fibres associées peuvent être très petites, jusqu'à la limite de la perception visuelle, c'est à dire une dimension de l'ordre de 1 à 2 mm de long pour un diamètre de 0.02 à 0.1 mm.

On présume que ce réseau de fibres se décompose jusqu'à l'échelle moléculaire.

Selon la composition du mélange initial introduit dans l'extrudeur, et les conditions de fonctionnement de l'extrudeur, notamment les températures et les pressions utilisées, une large gamme de textures orientées est obtenue.

Cette structure fibrée conduit à des propriétés rhéologiques et organoleptiques spécifiques du produit et de ses dérivés, difficiles à caractériser de façon instrumentale. Un échantillon de fibres de 30 mm de diamètre et 25 mm de longueur présente une élasticité proche des composés viscoélastiques de type synthétique : coefficient de relaxation de 60 à 90%, comparé à 100% pour le caoutchouc. L'homme du métier sait que la perception sensorielle humaine est telle que les dimensions de l'ordre de 10 µm sont détectées en bouche.

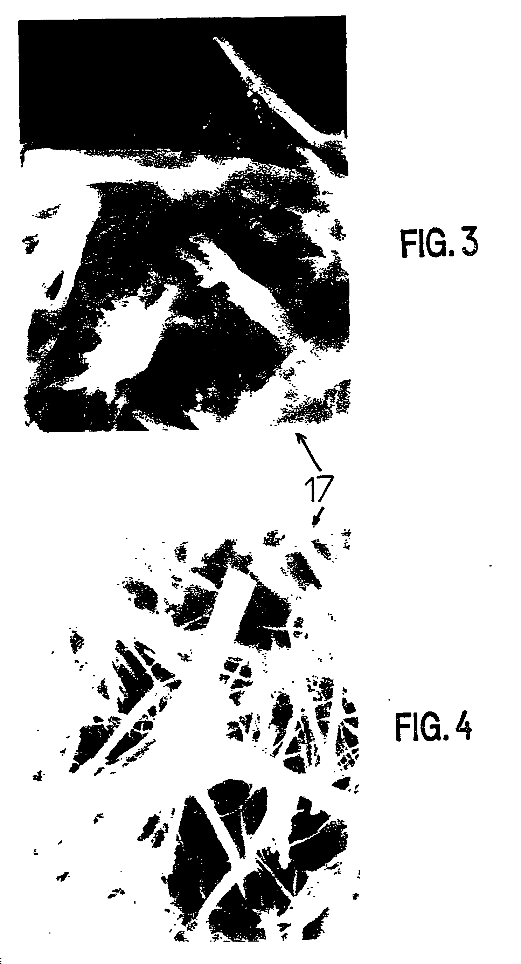

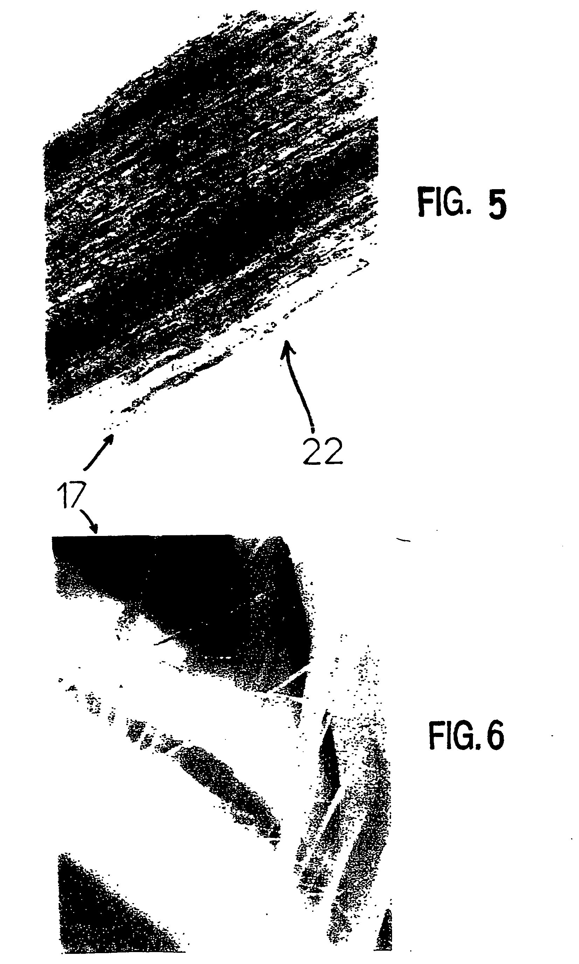

Les figures 3 à 6 illustrent le produit extrudé à structure fibreuse.

Selon un mode de réalisation, les produits en sortie- de filière subissent des traitements ultérieurs, servant de matériau de base ou d'ingrédient pour des préparations alimentaires très diverses, incorporés typiquement à raison de 15 à 70 % dans ces préparations.

Selon un mode de réalisation, le produit extrudé subit un hachage à l'aide d'un hachoir, et/ou une découpe, un écrasement, une dilacération, un déchiquetage, etc., de manière à obtenir des fibres hachées formant des miettes ou des faisceaux. Ces miettes peuvent être de dimensions très réduites jusqu'au niveau permis par le traitement mécanique de séparation des fibres.

Ces fibres ou ultrafibres hachées sont utilisées pour une étape de reprise culinaire, mélangées à d'autres ingrédients culinaires divers, tels que par exemple du fromage, du lait, des céréales, de l'amidon, des épices, des aromates, afin de former une mêlée.

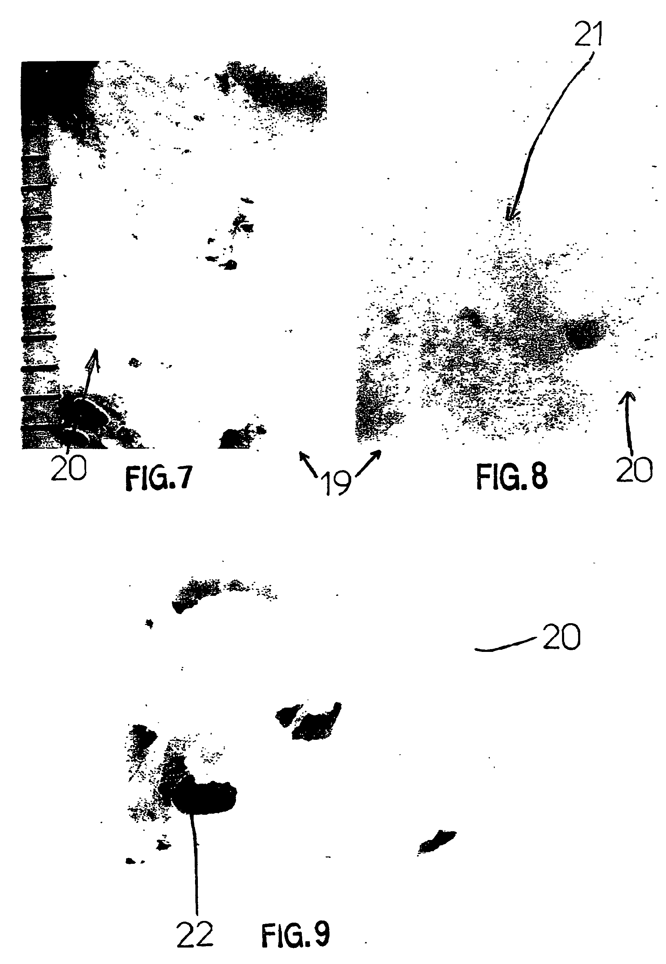

Cette mêlée est de composition variable selon les produits finaux que l'on souhaite obtenir à l'aide des fibres. Les figures 7 et 8 illustrent une préparation alimentaire 19 comprenant une matrice 20 incorporant des faisceaux 21. La figure 9 met en évidence des fibres 22 visibles dans cette matrice 20.

Les produits dérivés élaborés sont par exemple des en-cas, sandwichs, goûters, préparations pour plats cuisinés, steaks ou saucisses au fromage.

Ainsi, selon un mode de réalisation, la mêlée est mise en forme par exemple par un formage mécanique dans une formeuse, sous protection sanitaire rapprochée.

Selon une autre réalisation, la mêlée est mise en forme dans un boyau qui subit des étapes de pasteurisation, de tranchage, et éventuellement d'enrobage ou de décoration.

Les produits élaborés peuvent être par exemple cuits en moule, démoulés ou non, puis conditionnés.

Ces produits élaborés peuvent également servir de matière première à d'autres préparations culinaires, en suivant une étape de fritage, cuisson, pasteurisation, stérilisation, etc.

On présente maintenant quelques exemples de préparations culinaires dérivées incorporant le produit obtenu en sortie de l'extrudeur, produit à base de protéines de lactosérum et à texture fibreuse, ce produit étant désigné sous le terme protéines de lactosérum texturées dans ces exemples.

**Exemple de préparation n° 1 :** formulation d'un steak reconstitué sans viande à base de protéines de lactosérum texturées (40 %), d'emmental (13 %), de gouda (7 %), de cheddar (5 %), de lait entier pasteurisé (18 %), d'amidon de manioc (3 %), de flocons de céréales (8 %), de caséinate de sodium (2 %), d'eau (3 %) et d'épices (1 %). Cette préparation est mélangée au pétrin, pasteurisée, formée, décorée, et gratinée au four.

**Exemple de préparation n° 2 :** formulation et production de saucisses sans viande à base de protéines de lactosérum texturées (77 %), de cheddar (10 %), d'amidon de manioc gros grains (6 %), d'huile de tournesol (3 %), de divers autres ingrédients laitiers (3 %) et d'épices (1 %).
Cette préparation est barattée sous vide, poussée en boyau et cuite à la vapeur.

**Exemple de préparation n° 3 :** formulation et production de nuggets panés au fromage à base de protéines de lactosérum texturées (25 %), d'emmental (14 %), de gouda (14 %), de chapelure (13 %), d'eau (19 %), d'amidon de pomme de terre (11 %), de protéines de lait (3 %) et d'épices (1 %). Cette préparation est mélangée au cutter, formée, enrobée, farinée, panée et frite à l'huile.

**Exemple de préparation n° 4 :** formulation et production d'un ingrédient culinaire riche en protéines de lait à doser dans des salades, des entrées froides, des farces et fourrages salés, des potages et des gratins, à partir de protéines de lactosérum texturées (85 %), de marinade épicée à base de lait entier pasteurisé (12 %), de sel (1 %), d'herbes et aromates (2 %).
Cette préparation est préparée par barattage sous vide.

**Exemple de préparation n° 5 :** formulation et production d'une galette sucrée à base de protéines de lactosérum texturées (55 %), de fruits secs (12 %), de farine de blé (12 %), de flocons de céréales toastés (8 %), de sucre (7 %), de lait (5 %) et d'extrait de vanille (1 %).

Cette préparation est préparée par mélange au cutter, dosage, décoration, cuisson sur une plaque et gratinage.

**Exemple de préparation n° 6 :** formulation et production d'une pâte à tartiner sucrée à base de protéines de lactosérum texturées (25 %), de yaourt (55 %), de fruits frais (12 %), de pistache (4 %), de sucre (3 %) et d'un agent gélifiant (1 %). Cette préparation est préparée au cutter sous vide et dosée directement en pot.

**Exemple de préparation n° 7 :** formulation et production d'une pâte à tartiner salée grasse à base de protéines de lactosérum texturées (15 %), et/ou de fromage frais gras (80 %), d'extrait d'ail (3 %) et de ciboulette, de sel et d'autres épices (2 %).
Cette préparation est préparée par mélange avec un foisonneur avec injection de gaz, pompage et dosage en ligne.

Selon un autre mode de réalisation, il est possible, à l'aide de l'extrudeur, de fabriquer un produit alimentaire fourré. Un produit de fourrage alimentaire est introduit par une tête de coextrusion 23 débouchant dans la filière de l'extrudeur. Le produit de fourrage est par exemple introduit à une température inférieure à 25°C environ, de manière à refroidir l'interface avec la spécialité fromagère ou laitière extrudée à l'extérieur.

Le produit résultant est ainsi constitué d'une couche périphérique de matière fromagère ou laitière à la texture orientée dans le sens d'écoulement dans la filière, et d'un fourrage alimentaire de composition variée.

Le processus de coextrusion peut bien entendu s'appliquer à un mélange constitué exclusivement de matières premières fromagères ou laitières, mais également à des formules plus complexes constituées pour une partie minoritaire par des ingrédients alimentaires d'origines diverses : blé, soja, maïs, pois, riz, légumes, etc.

Le fourrage peut être une préparation fromagère ou laitière, par exemple un fromage fondu, mais aussi un fourrage d'origine végétale, charcutière, marine, à base d'aromates, etc.

On peut également, après l'étape d'extrusion/coextrusion, enrober le produit d'un produit d'enrobage tel que des céréales ou autres produits solides comestibles.

On peut ainsi obtenir un produit en trois couches composées d'un fourrage interne, d'une enveloppe en spécialité fromagère ou laitière, et d'un enrobage.

Selon l'outil de découpe 8 utilisé, la forme du produit peut être également ajustée, par exemple à l'aide d'un outil de découpe par pincement pour obtenir une forme allongée en coussin. Dans le cas d'un produit avec fourrage obtenu avec coextrusion, cette réalisation permet, moyennant un traitement mécanique du produit, d'enfermer le fourrage totalement à l'intérieur du produit.

On décrit maintenant plus précisément les matières premières utilisées dans le procédé.

La composition du mélange introduit dans l'extrudeur est sensiblement la même que celle du produit en sortie de filière ; de l'eau peut éventuellement être perdue en sortie de filière, par évaporation, à raison de 1 à 5% environ.

La matière sèche du mélange comprend 30 à 100% de matière sèche issue de lactosérum.

Lorsque la matière issue de lactosérum est une poudre introduite dans la zone d'alimentation, la poudre est obtenue après concentration ultrafiltration et/ou séparation sur colonnes de chromatographie préparative puis séchage par atomisation.

La matière issue de lactosérum introduite sous forme liquide dans l'extrudeur est par exemple un concentré obtenu après ultrafiltration ou diafiltration du lactosérum par exemple.

En complément de la matière sèche issue de lactosérum plus ou moins séché ou concentré, la matière sèche du mélange comprend par exemple, des matières grasses végétales ou laitières (dont beurre et crème), du blanc d'oeuf liquide ou sec, des protéines végétales plus ou moins concentrées ou isolées, des farines végétales, des amidons, des hydrocolloïdes alimentaires, des arômes et des colorants.

Le lactosérum peut être du lactosérum doux issu de fromagerie ou de caséine présure, ou du lactosérum acide issu de caséinerie acide.

Le taux de caséine de la matière sèche est faible, généralement inférieur à 10 %, ce qui exclut l'utilisation de caillés de fromagerie, ou de complexe avec des caséines en proportion élevée.

Les protéines végétales sont, selon une réalisation, des protéines de blé, pures ou sous forme d'un mélange de glutens panifiables (glutens à 70 - 75 % de protéines, selon le taux d'amidon et de son restant lors de l'extraction aboutissant au concentrat protéique).

Selon une réalisation, au lieu d'utiliser de la poudre de gluten de blé, on utilise une poudre ou une solution de pois, de lupin ou de soja, ou des protéines de blanc d'oeuf.

On présente maintenant quelques exemples de formulation détaillée du mélange.

### Exemple 1

- Concentré protéique de lactosérum en poudre à 75 % de protéines :16 % ;
- eau : 66 % ;
- caséinate de sodium : 1,7 % ;
- concentré protéique de blé à 72 % de protéines (13 %)
- blanc d'oeuf en poudre : 1,1 % ;
- glucides complexes : 0,5 % ;
- matières grasses laitières 1 % ;
- sel (0,4 %) ;
- arômes et aromates : 0,3 %.

### Exemple 2

- Concentré protéique liquide de lactosérum à 30 % de protéines : 40 % ;
- eau : 30 % ;
- caséine native ultrafiltrée en poudre : 3,7 % ;
- concentré protéique de pois à 68% de protéines : 6 % ;
- concentré protéique de blé à 72% de protéines : 6%
- blanc d'oeuf liquide : 10 % ;
- glucides complexes : 1 % ;
- matières grasses laitières : 2,5 % ;
- sel (0,7) ; arômes et aromates : 0,1 %.

### Exemple 3

- Fromage de lactosérum à 10 % de protéines : 78 % ;
- concentrat protéique de lactosérum en poudre à 80 % de protéines : 18 % ;
- caséinate de sodium : 1 % ;
- glucides complexes : 1 % ;
- beurre : 2 %.

### Exemple 4

- Concentré protéique liquide de lactosérum à 30 % de protéines : 80 % ;
- caséine presure : 3,2 % ;
- concentré protéique de pois à 65 % de protéines : 4 % ;
- concentré protéique de blé à 72 % de protéines : 4 % ;
- concentré protéique de soja à 67 % de protéines : 4 % ;
- blanc d'oeuf en poudre : 1 % ;
- glucides complexes : 1 % ;
- matières grasses laitières : 2 % ,
- sel : 0,7 %
- arômes et aromates : 0,1 %.

### Exemple 5

- Eau : 72 % ;
- isolat protéique de lactosérum en poudre à 90 % de protéines : 9 % ;
- caséinate de calcium : 0,4 % ;
- concentré protéique de blé à 72 % de protéines : 15 % ;
- glucides complexes : 1 % ;
- huile d'arachides : 2 % ;
- sel : 0,6 %.

### Exemple 6

- Eau : 70 % ;
- concentrat protéique de lactosérum en poudre à 80 % de protéines : 26,3 % ;
- caséinate de sodium : 0,3 % ;
- glucides complexes : 0,9 % ;
- beurre : 2,5 %.

### Exemple 7

- Eau : 61 % :
- concentré protéique de lactosérum en poudre à 82 % de protéines : 23 % ;
- concentré protéique de blé à 12 % de protéines : 13 % ;
- blanc d'oeuf en poudre : 1 % ;
- épices (1 %), matières grasses végétales (0,5 %), sel (0,5 %).

## Revendications

1. Produit alimentaire (17) susceptible d'être obtenu par cuisson-extrusion d'un mélange d'origine laitière ou fromagère qui comprend des protéines de lactosérum, **caractérisé en ce qu'**il présente une structure fibreuse orientée, les fibres formant un réseau de fibres macroscopiques, d'un diamètre de l'ordre de 0.1 mm à 1 mm, ramifiées en fibres microscopiques d'un diamètre de l'ordre de 1 µm à 0.1 mm

2. Produit selon la revendication 1 **caractérisé en ce que** la matière sèche du produit comprend 30 à 100% de matière sèche issue de lactosérum.

3. Produit selon la revendication 1 ou 2 **caractérisé en ce qu'**il comprend 15 à 50% de matière sèche et typiquement 25 à 40%, la matière sèche comportant au moins 35% de protéines totales.

4. Produit selon l'une quelconque des revendications 1 à 3 **caractérisé en ce que** la matière sèche de lactosérum comprend des protéines isolées ou concentrées, et/ou du lactosérum entier séché, et/ou des fractions de lactosérum séchées comme du lactose, des matières grasses de lait, de la lactoferrine, du calcium ou autres minéraux ou fractions du lait.

5. Produit selon l'une quelconque des revendications 1 à 4 **caractérisé en ce qu'**il comprend en plus des protéines de lactosérum d'autres fractions protéiques du lait de type caséines ou caséinates, du fromage, du lait séché ou concentré, la matière sèche du produit comprenant de préférence moins de 10% de caséines.

6. Produit selon l'une quelconque des revendications 1 à 5 **caractérisé en ce qu'**il comprend, en plus des protéines de lactosérum, des protéines non laitières, choisies parmi des protéines végétales concentrées ou isolées, notamment de gluten de blé, de soja ou de pois, du blanc d'oeuf liquide ou sec, les protéines non laitières représentant 0 à 70% de la matière sèche du mélange, et typiquement 20 à 50%.

7. Préparation alimentaire (19) incorporant un produit selon l'une quelconque des revendications 1 à 6 ajouté à des ingrédients divers choisis parmi notamment du fromage, du lait et produits dérivés (fromage blanc, yaourt, crème, beurre, poudres de lait...), des céréales, des amidons, farines ou semoules, des épices, des aromates, des morceaux de viande ou de poisson, des légumes, des fruits et fruits secs, des ingrédients sucrés (sucre, miel...), des matières grasses, des arômes, de manière à composer des plats cuisinés, des en-cas, sandwichs, goûters, préparations pour petit déjeuner, des ingrédients culinaires, des snacks ou saucisses de fromage, des produits végétariens, des pâtes à tartiner, des pâtés...

8. Préparation alimentaire selon la revendication 7 **caractérisé en ce qu'**elle présente une matrice (20) incorporant des fibres ou des faisceaux de fibres de dimensions de l'ordre du mm ou du cm, la préparation ayant des dimensions de l'ordre de quelques centimètres.

9. Préparation alimentaire selon l'une quelconque des revendications 7 ou 8 **caractérisée en ce qu'**elle est mise en forme par formage mécanique, par dosage et moulage, ou mise en boyau puis pasteurisée et tranchée, les préparations obtenues pouvant être décorées, marquées, cuites ou pré-cuites, pasteurisées, stérilisées, conditionnées.

10. Préparation alimentaire fourrée **caractérisée en ce qu'**elle comprend un produit selon l'une quelconque des revendications 1 à 6, entourant un produit de fourrage laitier ou non laitier.

11. Préparation alimentaire enrobée **caractérisée en ce qu'**elle comprend un produit selon l'une quelconque des revendications 1 à 6, entouré d'un produit d'enrobage laitier ou non laitier.

12. Préparation alimentaire selon l'une quelconque des revendications 7 à 11,
**caractérisée en ce qu'**elle comprend des sels, épices, aromates, arômes, de l'huile ou autres matières grasse, un correcteur d'acidité tel que de l'acide lactique.

13. Procédé de fabrication de produits présentant une structure fibreuse selon l'une selon l'une quelconque des revendications 1 à 6, **caractérisé en ce qu'**il comprend les étapes suivantes :
a) introduction des matières premières contenant des protéines de lactosérum, dans un extrudeur à au moins une vis (1) ;
b) transfert des matières premières de l'amont vers l'aval du fourreau (2) de l'extrudeur, la configuration de la ou des vis et la température à l'intérieur du fourreau, de l'amont vers l'aval étant adaptés pour faire subir aux matières premières successivement une étape de malaxage et de chauffage de la matière jusqu'à une température de 130°C environ, puis une étape de fusion et de montée en température et en pression de la matière au-delà de 130°C, généralement entre 140°C et 200°C, et entre 0 et 50 bars, de manière à obtenir la plastification de la matière transférée notamment des protéines de lactosérum ;
c) extrusion, à l'extrémité aval (11) du fourreau (2), de la matière obtenue après plastification, à travers une filière (7) adaptée à texturer, à mettre en forme et à refroidir la matière, de manière à obtenir un produit présentant une texture fibrée.

14. Procédé de fabrication selon la revendication 13 **caractérisé en ce que** le refroidissement de la matière extrudée se fait dans la filière (7) jusqu'à une température de 100°C, voire moins entre 80°C et 10°C, et comprend un premier refroidissement dans une zone non refroidie (15) de la filière en sortie du fourreau, puis un second refroidissement dans une zone refroidie (16) de la filière, le premier refroidissement correspondant à une zone d'alignement du mélange fondu qui est à un état visqueux selon une viscosité comprise entre 1000 et 500 000 centipoises, le second refroidissement correspondant à une zone de changement de phase de l'état visqueux à l'état solide, la vitesse linéaire de passage du produit en sortie de filière (7) étant de l'ordre de 2 à 10 m/min.

15. Procédé de fabrication selon la revendication 13 ou 14 **caractérisé en ce que** le chauffage à l'étape b) jusqu'à 130°C est progressif ou par paliers.

16. Procédé de fabrication selon l'une quelconque des revendications 13 à 15 **caractérisé en ce que** les températures dans le fourreau et la filière sont modifiées pour ajuster la texture des produits finis.

17. Procédé de fabrication selon l'une quelconque des revendications 13 à 16 **caractérisé en ce que** le mélange introduit dans l'extrudeur (1) est sous forme de poudre, toute l'eau nécessaire étant introduite avant l'étape de fusion, ou sous forme liquide ou pâteuse.

18. Procédé selon l'une quelconque des revendications 13 à 17, **caractérisé en ce que** les protéines de lactosérum sont issues de concentrats ou isolats de protéines de lactosérum de 50 à 90 % de pureté, de préférence de 70 à 80 %, comprenant en outre du lactose, des matières grasses, des minéraux, des protéines secondaires du type caséine macropeptide.

19. Procédé selon l'une quelconque des revendications 13 à 18, **caractérisé en ce qu'**il comprend en outre une étape de découpe en sortie de filière (7) de type hachage, coupe, écrasement, dilacération, déchiquetage ou analogue, de manière à obtenir des fibres hachées formant des miettes ou des faisceaux.

20. Procédé selon l'une quelconque des revendications 13 à 19, **caractérisé en ce qu'**il comprend une étape de séchage du produit en sortie de filière après découpe pour obtenir des fibres le cas échéant réhydratables pour des préparations alimentaires.

21. Procédé selon l'une quelconque des revendications 13 à 20, **caractérisé en ce qu'**il comprend en outre une étape de reprise culinaire utilisant les fibres hachées mélangées à des ingrédients divers tels que du fromage, du lait et produits dérivés, des céréales, des amidons, farines ou semoules, des matières grasses, des épices, des aromates, des arômes.

22. Procédé selon l'une quelconque des revendications 13 à 21, **caractérisé en ce qu'**il comprend en outre une étape de mise en forme comprenant des opérations de formage mécanique dans une formeuse ou de dosage et moulage, ou une étape de mise en boyau suivie de pasteurisation et de tranchage, les produits obtenus subissant le cas échéant au moins une des étapes suivantes : décoration, enrobage, marquage, fourrage, frittage, cuisson, pasteurisation, stérilisation, conditionnement.

23. Procédé selon l'une quelconque des revendications 13 à 22, **caractérisé en ce que**, à l'étape d'extrusion, on fourre la matière transférée dans la filière d'un produit de fourrage introduit par une tête de coextrusion débouchant dans la filière.

24. Procédé selon la revendication 23, **caractérisé en ce que** l'on réalise le produit de fourrage par un procédé d'extrusion.

25. Installation de fabrication pour la mise en oeuvre du procédé conforme à l'une des revendications 13 à 24, comprenant un extrudeur à vis (1) comportant deux vis sensiblement identiques s'engrenant l'une dans l'autre et entraînées en rotation dans un même sens de rotation à l'intérieur d'un fourreau allongé, des moyens d'alimentation disposés à une partie extrême amont du fourreau (2) équipés d'au moins un dispositif de dosage adapté à fournir le mélange à un débit prédéterminé, une filière d'extrusion (7) située à l'extrémité aval (6) dudit fourreau, des moyens de traitement thermique (8a) adaptés à réguler finement la température à l'intérieur du fourreau et de la filière d'extrusion, ledit fourreau comprenant :
- une première zone (9) d'alimentation de la formulation du produit
- une deuxième zone (10) de malaxage, le cas échéant d'hydratation, et de chauffage de la matière jusqu'à au moins 130° à coeur
- au moins une troisième zone (11) de fusion, de montée en température et en pression de la matière au-delà de 130°C, généralement entre 140 et 200°C, et entre 0 et 50 bars, selon la composition de la formule, dans laquelle se fait la plastification des protéines notamment des protéines de lactosérum.

26. Installation selon la revendication 25, **caractérisée en ce que** la deuxième zone (10) de malaxage et de chauffage comprend entre 2 et 5 modules, la troisième zone (11) de fusion comprend 1 à 3 modules, le rapport entre la longueur des vis et le diamètre des vis étant compris entre environ 10 et 33, et typiquement entre 25 et 33.

27. Installation selon la revendication 25 ou 26, **caractérisée en ce que** la filière d'extrusion comprend une première portion non refroidie (15) adjacente à l'extrémité aval de l'extrudeur à vis, suivie d'au moins une portion de refroidissement (16), correspondant respectivement à une zone d'alignement de la matière fondue à un état visqueux, et à une zone de changement de phase de l'état visqueux à l'état solide.

28. Installation selon l'une quelconque des revendications 25 à 27, **caractérisée en ce que** la fixation de la filière (7) sur le fourreau (2) se fait par au moins un et typiquement deux adaptateurs, un premier adaptateur constitué d'une ou deux perforations par la(es)quelle(s) est extrudée la matière fondue et plastifiée, et un second adaptateur situé entre le premier adaptateur et la filière d'extrusion, destiné à équilibrer les pressions et le flux de matière.

29. Installation selon l'une quelconque des revendications 25 à 28, **caractérisée en ce que** la filière d'extrusion a une forme intérieure adaptée au produit fini, sa dimension étant paramétrée pour permettre un refroidissement de la matière fondue et plastifiée jusqu'à 100°C, voire moins entre 80 et 10°C, sa surface intérieure étant d'une rugosité contrôlée également pour exercer des forces de cisaillement sur le produit au cours du refroidissement, la combinaison entre le refroidissement et les forces de cisaillement aux parois étant à l'origine de la texturation en continu de la matière refroidie pour former des fibres.

30. Installation selon l'une quelconque des revendications 25 à 29, **caractérisée en ce qu'**elle comprend une pompe d'extrusion située par exemple entre la première ou la deuxième interface et la filière, permettant une poussée régulière dans la filière afin de stabiliser l'écoulement des produits.

31. Installation selon l'une quelconque des revendications 25 à 30, **caractérisée en ce qu'**une tête de coextrusion débouche dans la filière d'extrusion.

## Claims

1. Food product (17) that can be obtained by cooking-extruding a milk- or cheese-based mixture that includes whey proteins, **characterised in that** it has a directed fibrous structure, the fibres forming a network of macroscopic fibres, with a diameter ranging from 0.1 mm to 1 mm, branching into microscopic fibres with a diameter ranging from 1 m to 0.1 mm.

2. Product according to claim 1, **characterised in that** the dry matter of the product comprises 30% to 100% of whey-based dry matter.

3. Product according to claim 1 or 2, **characterised in that** it comprises 15% to 50% of dry matter and typically 25% to 40%, the dry matter accounting for at least 35% of the total proteins.

4. Product according to any one of the claims from 1 to 3, **characterised in that** the dry matter from whey includes isolated or concentrated protein, and/or dry whole whey, and/or dry whey elements, such as lactose, fat from milk, lactoferrine, calcium and other dairy minerals or elements.

5. Product according to any one of the claims from 1 to 4, **characterised in that** it comprises, in addition to the proteins from whey, other proteinic elements from milk, such as caseins or caseinates, cheese, dried or concentrated milk, the dry matter of the product preferably comprising less than 10% of caseins.

6. Product according to any one of the claims from 1 to 5, **characterised in that** it comprises, in addition to the whey proteins, non-dairy proteins selected from concentrated or isolated vegetable proteins such as gluten from wheat, soy or peas and liquid or dry egg white, non-dairy protein accounting for 0% to 70% of the dry matter in the mixture, and typically 20% to 50%.

7. Food preparation (19) containing a product according to any one of the claims from 1 to 6 added to various ingredients such as, mainly, cheese, milk and dairy products (white cheese, yoghourt, cream, butter, milk powder, etc.) cereals, starches, wheat or semolina, spices, herbs, pieces of meat or fish, vegetables, fruit and dried fruit, sweet ingredients (sugar, honey, etc.) fat and flavourings in order to create convenience foods, snacks, sandwiches, treats, breakfast mixes, cooking ingredients, cheese snacks or sausages, vegetarian products, spreads, pâtés, etc.

8. Food preparation according to claim 7, **characterised in that** it has a matrix (20) that includes fibres or bundles of fibres with sizes in the order of mm or cm, the preparation having dimensions in the order of several centimetres.

9. Food preparation according to either one of the claims 7 or 8, **characterised in that** it is shaped by mechanical forming, by measuring and moulding, or placed in a casing and then pasteurised and sliced, and the obtained preparations may be decorated, marked, cooked or pre-cooked, pasteurised, sterilised, packaged.

10. Filled food preparation **characterised in that** it comprises a product according to any one of the claims from 1 to 6, surrounding a dairy or non-dairy filling product.

11. Wrapped food preparation **characterised in that** it contains a product according to any one of the claims from 1 to 6, surrounded with a dairy or non-dairy wrapping product.

12. Food preparation according to any one of the claims from 7 to 11, **characterised in that** it comprises salt, spices, herbs, flavourings, oil or other fats, an acid regulator such as lactic acid.

13. Method of manufacturing products with a fibrous structure according to any one of the claims from 1 to 6, **characterised in that** it comprises the following steps:
a) insertion of the raw materials containing whey proteins in an extruder with at least one screw (1);
b) transferring the raw materials downstream towards the front of the plasticizing cylinder (2) of the extruder, the configuration of the screw or screws and the temperature inside the plasticizing cylinder, in the downstream direction, being adapted in order to subject the raw materials to successive steps of mixing and heating the material until it reaches a temperature of around 130°C, followed by a step of melting and increasing the temperature and pressure of the material beyond 130°C, generally to between 140°C and 200°C, and between 0 and 50 bars, in order to achieve plasticization of the transferred material, in particular of the whey proteins;
c) extrusion, at the downstream end (11) of the plasticizing cylinder (2), of the material obtained after plasticization, through a die (7) that is adapted so as to shape and cool the material in order to obtain a product with a fibrous texture.

14. Manufacturing method according to claim 13, **characterised in that** the cooling of the extruded material takes place in the die (7) until it reaches a temperature of 100°C, or even between 80°C and 10°C, and includes initial cooling in a non-refrigerated area (15) of the die at the output of the plasticizing cylinder, followed by a second cooling step in a refrigerated area (16) of the die, the first cooling step corresponding to an area where the melted mixture, which is in a viscous state with a viscosity comprised between 1,000 and 500,000 centipoises, is aligned, the second cooling step corresponding to an area where it changes from the viscous state to the solid state, the linear speed at which the product passes through the output of the die (7) being in the order of 2 to 20 m/min.

15. Manufacturing method according to claim 13 or 14, **characterised in that** the heating until 130°C in step b) is gradual or by stages.

16. Manufacturing method according to any one of the claims from 13 to 15, **characterised in that** the temperatures in the plasticizing cylinder and the die are modified in order to adjust the texture of the finished products.

17. Manufacturing method according to any one of the claims from 13 to 16, **characterised in that** the mixture introduced in the extruder (1) is in the form of a powder, all the water required being added during the melting step, or in a liquid or doughy form.

18. Method according to any one of the claims from 13 to 17, **characterised in that** the whey proteins are derived from whey protein concentrate or isolate with a purity of 50% to 90%, preferably between 70% and 80%, also comprising lactose, fat, minerals, secondary proteins such as casein macropeptide.

19. Method according to any one of the claims from 13 to 18, **characterised in that** it also comprises a step of cutting the product at the output of the die (7), such as chopping, cutting, mashing, dilaceration, tearing or others, so as to obtain chopped fibres that form crumbs or bundles.

20. Method according to any one of the claims from 13 to 19, **characterised in that** it comprises a step of drying the product at the output of the die in order to obtain fibres which can be rehydrated as required for food preparations.

21. Method according to any one of the claims from 13 to 20, **characterised in that** it also comprises a second cooking step using the chopped fibres mixed with various ingredients such as cheese, milk and dairy products, cereals, starches, flours or semolinas, fat, spices, herbs, flavourings.

22. Method according to any one of the claims from 13 to 21, **characterised in that** it also comprises a shaping step comprising operations of mechanical forming in a forming mill or measuring and moulding, or a step of placing the mixture in a casing and then pasteurising and slicing it, the obtained products undergoing, as required, at least one of the following steps: decoration, coating, marking, filling, frying, cooking, pasteurisation, sterilisation, packaging.

23. Method according to any one of the claims from 13 to 22, **characterised in that**, during the extrusion step, the material transferred into the die is filled with a filling product inserted by a co-extrusion head that connects into the die.

24. Method according to claim 23, **characterised in that** the filling product is made following an extrusion method.

25. Manufacturing facility for implementing the method according to any one of the claims from 13 to 24, comprising a screw extruder (1) with two substantially identical screws that engage with each other and are driven in the same direction of rotation inside an elongated plasticizing cylinder, the feeding system being placed on one end, upstream from the plasticizing cylinder (2) and equipped with at least one measuring device that is adapted to supply the mixture at a pre-established rate, an extrusion die (7) located at the downstream end (8) of said plasticizing cylinder, and heat treatment means (8a) adapted for finely adjusting the temperature inside the plasticizing cylinder and the extrusion die, said plasticizing cylinder comprising:
- a first section (9) for feeding the product formula
- a second section (10) for mixing, hydrating as required, and heating the material until it reaches at least 130°C in the core.
- at least one third section (11) for melting, increasing the temperature and pressure of the material beyond 130°C, generally to between 140°C and 200°C and between 0 and 50 bars, according to the composition of the formula, in which the proteins, normally whey proteins, are plasticized.

26. Facility according to claim 25, **characterised in that** the second mixing and heating section (10) comprises between 2 and 5 modules, the third melting section (11) comprises 1 to 3 modules, and the length to diameter ratio of the screws is comprised between around 10 and 33, and typically between 25 and 33.

27. Facility according to claim 25 or 26, **characterised in that** the extrusion die comprises a first, non-refrigerated portion (15) which is adjacent to the downstream end of the screw extruder, followed at least by one refrigerated portion (16) which respectively correspond to an area in which the melted material is aligned in a viscous state and an area in which it changes from the viscous state to the solid state.

28. Facility according to any one of the claims from 25 to 27, **characterised in that** the die (7) is attached to the plasticizing cylinder (2) by means of at least one and typically two adapters, a first adapter consisting of one or two perforations through which the melted, plasticized material is extruded, and a second adapter located between the first adapter and the extrusion die, which balances the pressure and the flow rates of the material.

29. Facility according to any one of the claims from 25 to 28, **characterised in that** the inside of the extrusion die has a shape that adapts to the finished product, its dimensions being adjusted to allow the melted, plasticized material to be cooled to 100°C, or even to between 80° and 10°, the roughness of its inner surface also being controlled to exert shearing forces on the product during the cooling process, the combination of the cooling and the shearing forces on the walls resulting in the continuous texturisation of the cooled material that forms the fibres.

30. Facility according to any one of the claims from 25 to 29, **characterised in that** it includes an extrusion pump located, for example, between the first and second interface and the die, providing a regular pressure in the die in order to stabilise the flow of the products.

31. Facility according to any one of the claims from 25 to 30, **characterised in that** a co-extrusion head connects into the extrusion die.

## Patentansprüche

1. Nahrungsmittel (17), das zum Kochen-Extrudieren einer Milch- oder Käsemischung mit Molkeproteinen erhalten wird, **dadurch gekennzeichnet, dass** es eine Struktur aus gerichteten Fasern aufweist, wobei die Fasern ein makroskopisches Fasernetz mit einem Durchmesser von 0,1 mm bis 1 mm bilden und in mikroskopischen Fasern mit einem Durchmesser von 1 µm bis 0,1 mm verzweigt sind.

2. Nahrungsmittel nach Patentanspruch 1, **dadurch gekennzeichnet, dass** die Trockenmasse des Nahrungsmittels 30 bis 100 % Trockenmasse aus Molke enthält.

3. Nahrungsmittel nach Patentanspruch 1 oder 2, **dadurch gekennzeichnet, dass** 15 bis 50 %, charakteristischerweise jedoch 25 bis 40 % Trockenmasse enthält, wobei die Trockenmasse insgesamt mindestens 35 % Proteine aufweist.

4. Nahrungsmittel nach einem der Patentansprüche 1 bis 3, **dadurch gekennzeichnet, dass** die Molketrockenmasse isolierte oder konzentrierte Proteine und/oder getrocknete Vollmolke und/oder getrocknete Molkefraktionen wie Laktose, Milchfett, Lactoferrin, Kalzium oder andere Mineralien oder Milchfraktionen aufweist.

5. Nahrungsmittel nach einem der Patentansprüche 1 bis 4, **dadurch gekennzeichnet, dass** es neben den Molkeproteinen andere proteinartige Fraktionen der Milch vom Typ Kasein oder Kaseinate, Käse, Trockenmilch oder kondensierte Milch enthält, wobei die Trockenmasse des Nahrungsmittels vorzugsweise weniger als 10 % Kasein aufweist.

6. Nahrungsmittel nach einem der Patentansprüche 1 bis 5, **dadurch gekennzeichnet, dass** es neben den Molkeproteinen Proteine umfasst, die nicht aus Milch stammen, und die aus konzentrierten oder isolierten Pflanzenproteinen, insbesondere Weizengluten, Soja oder Erbsen, flüssigem oder trockenem Eiweiß ausgewählt werden, wobei der Anteil der nicht aus Milch stammenden Proteine 0 bis 70 % der Trockenmasse der Mischung und charakteristischerweise 20 bis 50 % ausmacht.

7. Nahrungsmittelzubereitung (19) mit einem Nahrungsmittel nach einem der Ansprüche 1 bis 6, das zu diversen Zutaten, die insbesondere aus Käse, Milch und Nebenprodukten (Quark, Joghurt, Creme, Butter, Milchpulver...), Getreide, Stärke, Mehl oder Grieß, Gewürzen, Aromaten, Fleisch- oder Fischstücken, Gemüse, Obst oder Trockenobst, süßen Zutaten (Zucker, Honig...), Fetten, Aromastoffen ausgesucht werden, hinzugefügt wird, so dass Gerichte, ein Imbisse, Sandwichs, süße Zwischenmahlzeiten, Frühstückszubereitungen, kulinarische Zutaten, Snacks oder Käsewürstchen, vegetarische Nahrungsmittel, Streichpasten, Pasteten... hergestellt werden.

8. Nahrungsmittel nach Patentanspruch 7, **dadurch gekennzeichnet, dass** es eine Matrix (20) mit Fasern oder Fasersträngen in einer Größenordnung von mm oder cm aufweist, wobei die Zubereitung mehrere Zentimeter groß ist.

9. Nahrungsmittelzubereitung nach einem der Ansprüche 7 bis 8, **dadurch gekennzeichnet, dass** sie durch mechanische Bearbeitung, Dosierung, Formung oder Einfüllen in eine Wursthülle in Form gebracht, pasteurisiert und in Scheiben geschnitten wird, wobei die erzielten Zubereitungen dekoriert, **gekennzeichnet**, gekocht oder vorgekocht, pasteurisiert, sterilisiert oder verpackt werden können.

10. Gefüllte Nahrungsmittelzubereitung, **dadurch gekennzeichnet, dass** sie ein Nahrungsmittel nach einem der Patentansprüche 1 bis 6 umfasst, das eine Füllung auf der Basis eines Molkereiprodukts oder eine andere Füllung umgibt.

11. Überzogene Nahrungsmittelzubereitung, **dadurch gekennzeichnet, dass** sie ein Nahrungsmittel nach einem der Patentansprüche 1 bis 6 umfasst, das mit einem Überzug aus einem Molkereiprodukt oder einem anderen Produkt umgeben ist.

12. Nahrungsmittelzubereitung nach einem der Ansprüche 7 bis 11, **dadurch gekennzeichnet, dass** es Salze, Gewürze, Aromate, Aromastoffe, Öl, andere Fette und einen Säureregulator wie z.B. Milchsäure umfasst.

13. Fertigungsverfahren für Nahrungsmittel mit einer Faserstruktur gemäß einem der Patentansprüche 1 bis 6, **dadurch gekennzeichnet, dass** es folgende Schritte umfasst:
a) das Einführen von Rohstoffen mit Molkeproteinen in einen Extruder mit mindestens einer Schnecke (1):
b) den Transfer der Rohstoffe vom Eintritt (2) in die Buchse des Extruders bis zum Austritt aus der Buchse, wobei die Konfiguration des oder der Schnecken und die Temperatur beim Eintritt in und beim Austritt aus der Buchse so sein muss, dass die Rohstoffe nacheinander erst eine Phase des Knetens, eine Phase der Erhitzung auf eine Temperatur von 130° C, eine Phase des Schmelzens, eine Phase der Erhitzung der Masse auf über 130°C, generell auf 140° C bis 200°C, bzw. eine Phase des Druckanstiegs auf 0 und 50 bar durchlaufen, so dass das Weichmachen der transferierten Materie und insbesondere der Molkeproteine bewirkt wird;
c) am vorderen Ende (11) der Buchse (2) das Extrudieren der Masse nach dem Weichmachen über eine Düse (7), die so angepasst wurde, dass sie die Masse texturiert, in Form bringt und abkühlt, so dass ein Produkt erzielt wird, das eine Faserstruktur aufweist.

14. Fertigungsverfahren nach Patentanspruch 13, **dadurch gekennzeichnet, dass** die Abkühlung der extrudierten Masse in der Düse (7) bei einer Temperatur von bis zu 100°C, bzw. bei 80°C bis 10°C erfolgt, und eine erste Abkühlungsphase in einer nicht abgekühlten Zone (15) der Düse am Ende der Buchse und eine zweite Abkühlungsphase in einer abgekühlten Zone (16) der Düse umfasst, wobei die erste Abkühlung einer Zone zur Ausrichtung der geschmolzenen Masse, die sich in einem zähflüssigen Zustand mit einer Viskosität zwischen 1000 und 500 000 Zentipoise befindet, entspricht, und die zweite Abkühlungsphase einer Zone entspricht, in der die Masse vom zähflüssigen Zustand in den festen Zustand übergeht, wobei die lineare Durchgangsgeschwindigkeit des Nahrungsmittels am Austritt der Düse (7) zwischen 2 bis 10 m/min beträgt.

15. Fertigungsverfahren nach Patentanspruch 13 oder 14, **dadurch gekennzeichnet, dass** das Erhitzen in Zustand b) auf 130°C langsam und stufenweise erfolgt.

16. Fertigungsverfahren nach einem der Patentansprüche 13 oder 15, **dadurch gekennzeichnet, dass** die Temperaturen in der Buchse und in der Düse verändert werden, um die Textur der fertigen Nahrungsmittel anzugleichen.

17. Fertigungsverfahren nach einem der Patentansprüche 13 oder 16, **dadurch gekennzeichnet, dass** die in den Extruder (1) eingeführte Mischung in Form von Pulver eingeführt wird, wobei das erforderliche Wasser vor der Schmelzphase hinzugefügt wird, oder aber in flüssiger oder teigartiger Form.

18. Fertigungsverfahren nach einem der Patentansprüche 13 oder 17, **dadurch gekennzeichnet, dass** die Molkeproteine aus Konzentraten oder Isolaten von Molke mit einer Reinheit von 50 bis 90° %, vorzugsweise aber 70 bis 80% stammen, und ferner Laktose, Fette, Mineralien und sekundäre Proteine vom Typ Kasein-Makropeptide enthalten.

19. Fertigungsverfahren nach einem der Patentansprüche 13 oder 18, **dadurch gekennzeichnet, dass** es eine Phase der Zerkleinerung am Austritt der Düse (7) vom Typ Hacken, Schneiden, Zerstampfen, Zerreißen, Zerstückeln oder ähnliches umfasst, so dass gehackte Fasern entstehen, die Krümel oder Faserstränge bilden.

20. Fertigungsverfahren nach einem der Patentansprüche 13 oder 19, **dadurch gekennzeichnet, dass** es eine Phase der Trocknung des Nahrungsmittels am Austritt der Düse nach dem Zerkleinern umfasst, um Fasern zu erhalten, die gegebenenfalls für Nahrungsmittelzubereitungen wieder mit Feuchtigkeit angereichert werden können.

21. Fertigungsverfahren nach einem der Patentansprüche 13 oder 20, **dadurch gekennzeichnet, dass** es ferner eine Phase der kulinarischen Nachbearbeitung umfasst, bei der gehackte Fasern, vermischt mit diversen Zutaten wie Käse, Milch und Nebenprodukten, Getreide, Stärke, Mehl oder Gries, Fetten, Gewürzen, Aromaten und Aromastoffen, benutzt werden.

22. Fertigungsverfahren nach einem der Patentansprüche 13 oder 21, **dadurch gekennzeichnet, dass** es ferner eine Phase der Formgebung umfasst, die die Vorgänge der mechanischen Bearbeitung in einer Formmaschine oder die Dosierung und Formung in Formen umfasst, oder eine Phase des Einfüllens in eine Wursthülle, gefolgt von der Pasteurisierung und dem Schneiden in Scheiben, wobei die erhaltenen Nahrungsmittel gegebenenfalls mindestens eine der folgenden Phasen durchlaufen: Dekoration, Überzug, Kennzeichnung, Füllen, Frittieren, Kochen, Pasteurisierung, Sterilisieren, Verpacken.

23. Fertigungsverfahren nach einem der Patentansprüche 13 bis 22, **dadurch gekennzeichnet, dass** man in der Extrusionsphase die transferierte Masse in der Düse mit einer Füllung füllt, die über einen Koextrusionskopf eingeführt wird.

24. Verfahren nach Patentanspruch 23, **dadurch gekennzeichnet, dass** man die Füllung in einem Extrusionsverfahren herstellt.

25. Fertigungsanlage zur Verwendung des Verfahrens gemäß einem der Patentansprüche 13 bis 24, das einen Schneckenextruder (1) mit zwei deutlich identischen Schnecken, die ineinander eingreifen und drehend in der gleichen Drehrichtung im Innern einer länglichen Buchse angetrieben werden, umfasst, Einzugsmittel an einem Endstück vor der Buchse (2), die mit mindestens einer Dosiervorrichtung zum Bereitstellen der Mischung in einer bestimmten Menge versehen sind, eine Extrusionsdüse (7) am Ende (6) der Buchse, und thermische Behandlungsmittel (8a) zur Feinregulierung der Temperatur in der Buchse und der Extrusionsdüse, wobei besagte Buchse folgendes umfasst:
- eine erste Zone zum Einziehen (9) der Produktrezeptur
- eine zweite Zone zum Kneten (10), gegebenenfalls der Zufuhr von Feuchtigkeit und zum Erhitzen der Masse auf mindesten 130°im Kern
- mindestens eine dritte Zone (11) zum Schmelzen, zur Temperaturerhöhung auf über 130°C, generell auf 140 bis 200°C und zur Druckerhöhung bis 50 bar gemäß der Zusammensetzung der Rezeptur, in der die Proteine, insbesondere die Molkeproteine weich gemacht werden.

26. Anlage nach Patentanspruch 25, **dadurch gekennzeichnet, dass** die zweite Zone (10) zum Kneten und Erhitzen 2 bis 5 Module umfasst, und die Zone zum Schmelzen (11) 1 bis 3 Module, und das Verhältnis zwischen der Länge der Schnecken und dem Durchmesser der Schnecken zwischen 10 und 33, charakteristischer weise jedoch zwischen 25 und 33 beträgt.

27. Anlage nach Patentanspruch 25 oder 26, **dadurch gekennzeichnet, dass** die Extrusionsdüse einen ersten nicht abgekühlten Abschnitt (15) neben dem oberen Ende des Schneckenextruders umfasst, gefolgt von mindestens einem Kühlabschnitt (16), der jeweils zu einer Ausrichtungszone für die geschmolzene Masse in einem zähflüssigen Zustand gehört, und eine Zone, in der die Masse vom zähflüssigen Zustand in den festen Zustand übergeht.

28. Anlage nach einem der Patentansprüche 25 bis 27, **dadurch gekennzeichnet, dass** die Befestigung der Düse (7) auf der Buchse (2) durch mindestens ein, charakteristischerweise aber zwei Anpasstücke erfolgt, wobei ein erstes Anpassstück aus einer oder zwei Perforationen besteht, durch die die geschmolzene und weich gemachte Masse extrudiert wird, und ein zweites Anpassstück zwischen dem ersten Anpassstück und der Extrusionsdüse angeordnet ist, das dazu bestimmt ist, den Druck und den Materialfluss auszugleichen.

29. Anlage nach einem der Patentansprüche 25 bis 28, **dadurch gekennzeichnet, dass** die Extrusionsdüse innen eine Form aufweist, die dem Fertigerzeugnis entspricht, wobei dessen Maß parametrisiert ist, um ein Abkühlen der geschmolzenen und weich gemachten Masse auf 100°C, bzw. 80°C bis 10°C zu ermöglichen, wobei die Innenfläche eine Rauheit aufweist, die auch deshalb kontrolliert wird, um Scherkräfte während des Abkühlens auf das Produkt einwirken zu lassen, wobei die Kombination aus Abkühlung und Scherkräften an den Wänden die kontinuierliche Texturierung der abgekühlten Masse bewirkt, um Fasern zu bilden.

30. Anlage nach einem der Patentansprüche 25 bis 29, **dadurch gekennzeichnet, dass** sie eine Extrusionspumpe umfasst, die sich beispielsweise zwischen der ersten und der zweiten Schnittstelle und der Düse befindet, und somit einen regelmäßigen Vorschub in der Düse ermöglicht, um den Fluss des Nahrungsmittels zu stabilisieren.

31. Anlage nach einem der Patentansprüche 25 bis 30, **dadurch gekennzeichnet, dass** ein Koextrusionskopf zur Extrusionsdüse führt.
